Europäisches Patentamt

European Patent Office

Office européen des brevets

(11) Publication number: **0 143 495**
**B1**

# EUROPEAN PATENT SPECIFICATION

(45) Date of publication of patent specification: **08.11.89**

(51) Int. Cl.⁴: **G 01 N 23/207**

(21) Application number: **84201681.8**

(22) Date of filing: **20.11.84**

(54) X-ray analysis apparatus comprising a deflection system.

(30) Priority: **22.11.83 NL 8304009**

(43) Date of publication of application:
**05.06.85 Bulletin 85/23**

(45) Publication of the grant of the patent:
**08.11.89 Bulletin 89/45**

(84) Designated Contracting States:
**DE FR GB NL**

(56) References cited:
DE-B-1 265 450
US-A- 852 594
US-A-3 471 694

JOURNAL OF PHYSICS E. SCIENTIFIC
INSTRUMENTS, vol. 15, no. 1, January 1982,
pages 40-43, DORKING (GB). D.E. HAYCOCK et
al.: "Resolution enhancement for a commercial
x-ray fluorescence spectrometer"

(73) Proprietor: **N.V. Philips' Gloeilampenfabrieken**
**Groenewoudseweg 1**
**NL-5621 BA Eindhoven (NL)**

(72) Inventor: **Gotz, Dieter Helmut**
**c/o INT. OCTROOIBUREAU B.V. Prof. Holstlaan 6**
**NL-5656 AA Eindhoven (NL)**
Inventor: **Wagemans, Hubertus Franciscus**
**Marie**
**c/o INT. OCTROOIBUREAU B.V. Prof. Holstlaan 6**
**NL-5656 AA Eindhoven (NL)**

(74) Representative: **Scheele, Edial François et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an X-ray analysis apparatus, which comprises an X-ray source, a specimen carrier and an X-ray detector which is arranged, when viewed along the propagation direction of an X-ray beam generated in a specimen to be examined, beyond a collimating member for the X-ray beam.

In knonw apparatus as described in US 3,852,594 charged particles, notably electrons which are generated, for example, by the X-ray beam and which penetrate the detector, have a disturbing effect. The charged particles cause a background signal which has a disturbing effect notably on the measurement of longwave length X-rays, i.e. during the analysis of specimens including elements having a comparatively low atomic number, because the detector entrance windows to be used in those circumstances, only absorb the particles to a small extent and the detection signal generated by each X-ray quantum is not substantially greater than that for said particle. Charged particles such as electrons and ions can be released by the X-ray beam from the specimen, and from irradiated structural parts of the apparatus such as an X-ray beam collimating member and the like.

It is an object of the invention to protect the detector against the incidence of charged particles without loss of sensitivity for, notably, longwave length X-rays and without giving rise to disturbing effects. To this end, an X-ray analysis apparatus of the kind set forth is characterized in that either respective laminae of a laminated collimator can be maintained at different potentials or permanent magnetic material forms part of a laminae structure of a collimator in order to constitute a deflecting system for charged particles.

Because the charged particles in an X-ray analysis apparatus in accordance with the invention are deflected away from the detector entrance, they will not form part of the detector signal; a substantial improvement in the signal-to-noise ratio of the detection signal will thus be obtained notably for the analysis of light elements.

It is remarked here that an X-ray analysis apparatus in which near to an entrance slit of the X-ray detector two magnets are mounted to prevent charged particles to reach the detector is known from US 3,471,694.

In a preferred embodiment deflection takes place by means of a magnetic deflection field which is introduced into the X-ray beam path in front of the detector and whose extension to the specimen, the X-ray source and the detector is restricted by means of a magnetic shield. To achieve this, for example permanent magentic material may be included in a locally arranged collimating member. The magnetic material may be included notably in the laminae which form a collimator, or take the place of the spacers between the laminae. Suitable shielding of the magnetic field is provided by a magnetic shield arranged about the collimator and comprising the permanent magnetic material.

For suitable reproducibility and reliability of the apparatus, proper shielding against stray fields is extremely desirable in X-ray spectrometers in which the detector and the associated collimating member rotate with respect to the specimen and the X-ray source in order to perform a 2 θ-type of displacement. In sumultaneous spectrometers in which the detector often comprises photomultiplier tubes, it is important to take this into account with respect to the shielding. The invention can be used notably for sequential and simltaneous spectrometers. For the analysis of elements having a low atomic number, for example lower than approximately 20, the local deflection of charged particles in such apparatus readily results in an improvement of the signal-to-noise ratio of the detection signal by a factor of two.

Some preferred embodiments in accordance with the invention will be described in detail hereinafter with reference to the drawing. Therein:

Figure 1 shows a sequential X-ray spectrometer which includes a detector collimator provided with a deflection system in accordance with the invention, and

Figure 2 shows a simultaneous X-ray spectrometer which includes a detector gap provided with such a deflection system.

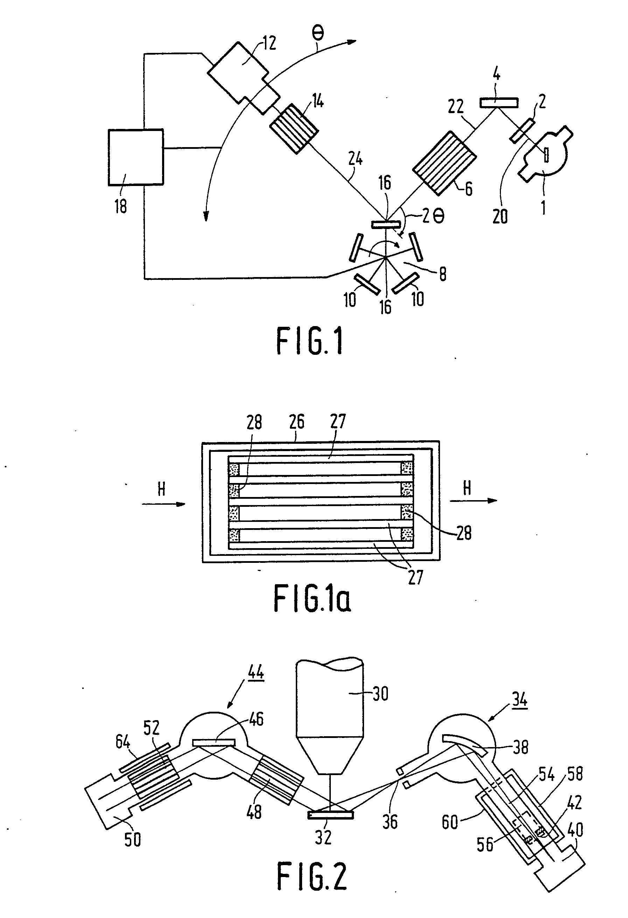

Fig. 1 shows diagrammatically a sequential X-ray spectrometer, comprising an X-ray source 1 with a radiation filter 2, a specimen 4, a primary collimator 6, a crystal changer 8, which in this case comprises five different analyser crystals 10, and an X-ray detector 12 with a secondary collimator 14. Using a known mechanism (not shown), the detector can be rotated about a point of rotation 16 in order to perform the required 2 θ-type of displacement, so that an X-ray spectrum can be recorded. For recording and processing such a spectrum, use is made of an electronic circuit 18 which is also capable of controlling the angular position of the detector with respect to the specimen.

The appropriate radiaton spectrum for an X-ray beam 20 generated by the X-ray tube, is provided for analysis by selection of the anode material, the high voltage used in the X-ray tube, and the filter 2 arranged in the beam path. The X-ray beam 20 causes fluorescence in the specimen. An X-ray beam 22 thus generated contains a pattern of radiation which is characteristic of elements in the specimen. The various characteristic radiation peaks in a beam 24 are spatially separated viewed through the angle θ, by diffraction at an analyser cyrstal 10. This spectrum can subsequently be measured by means of the detector. In accordance with the invention a deflection system for changed particles is added to the collimator 14 in this embodiment. As is shown in detail in Figure 1a, for field shielding, the collimator is enclosed by a shielding cage 26 which consists of, for example, nickel-iron. For the sake of clarity, the direction of a magnetic deflection field H is shown in Figure 1a for an X-ray beam direction perpendicular with respect to the plane of the drawing of Figure 1a.

The permanent magnetic material is included in the laminar structure of the collimator. This can be achieved, for example, by making each lamina 27, or some of the laminae, of a permanent magnetic material or by adding a permanent magnetic material thereto. In this preferred embodiment, spacers 28 between the laminae of the collimator are made of a permanent magnetic material.

Fig. 2 diagrammatically shows a simultaneous X-ray spectrometer which comprises an X-ray source 30, a specimen 32, a first detection system 34 with a primary radiation gap 36, an analysis crystal 38 which is curved in this case, and a detector 40 with a secondary radiation gap 42 and a second detection system 44 with an analysis crystal 46, which is flat in this case, a primary collimator 48, and a detector 50 with a secondary collimator 52.

Between the crystal 38 and the detector gap 42 there is again provided a permanent magnetic material for the lateral deflection of the electrons present in a space 54; consequently, these electrons will not pass through the detector gap 42. The permanent magnetic material is in this case formed, for example by two magnets 56. In order to reduce the stray fields generated by the deflection system, a magnetic shield 58 of a soft magnetic material is again arranged about the collimating member incorporating the permanent magnetic material. A collimator 52 of the second detection system 44 can also be provided with a magnetic deflection system as described with reference to Fig. 1a; a permanent magnetic material is then preferably incorporated in the collimator, for example, in the form of permanent magnetic spacers between the laminae. The collimator incorporating the magnetic material is, in similar manner, shielded against stray fields by means of a shielding sleeve 64 of a soft-magnetic material.

Deflection can also be performed in an electromagnetic or an electrostatic manner similar to that described for a magnetic deflection system. For electrostatic deflection, laminae of a collimator are preferably maintained at different potentials. Consequently, the laminae must be electrically insulated from one another and be provided with supply leads. Electrostatic deflection has the advantage that a higher degree of freedom exists as regards the adjustment of the intensity of the deflection field; it is a drawback, however, in that the presence of supply leads is often inconvenient. A high degree of freedom of adjustment is also obtained in the case of electromagnetic deflection utilizing, for example a magnetic coil whose field is effective in the vicinity of the collimating member. It could be a drawback that it would be more difficult to shield such a coil; moreover, such a shielded coil requires a comparatively large amount of space. Notably when a permanent magnetic material is used, suitable stray field shield can be provided without requiring a large additional amount of space, so that the apparatus need not be significantly modified.

**Claims**

1. An X-ray analysis apparatus comprising an X-ray source (1), a specimen carrier and an X-ray detector (12) which is arranged, when viewed along the beam path of an X-ray beam (22) generated in a specimen (4) beyond a laminated collimating member (14) which collimates the X-ray beam, characterized in that respective laminae (27) of the laminated collimator (14) can be maintained at different potentials and from an electrostatic deflection system for charged particles.

2. An X-ray analysis apparatus comprising an X-ray source (1), a specimen carrier and an X-ray detector (12, 50) which is arranged, when viewed along the beam path of an X-ray beam (22) generated in a specimen (4, 32) beyond a laminated collimating member (14, 52) which collimates the X-ray beam, characterized in that permanent magnetic material forms part of the laminated structure of the collimator forming a deflection system for charged particles.

3. An X-ray analysis apparatus as claimed in Claim 2, characterized in that spacers (28) which are made of permanent magnetic material and which are arranged between laminae (27) of a collimator form part of the magnetic deflection system.

4. An X-ray analysis apparatus as claimed in Claim 2 or 3, characterized in that the deflection system is arranged and shielded so that the field strength is negligibly small in vicinity of a specimen to be examined (4, 32) as well as the vicinity of an X-ray detector (12, 40, 50) or an X-ray tube (1, 30).

5. An X-ray analysis apparatus as claimed in any one of the preceding claims, characterized in that the detector is specifically constructed for the detection of comparatively soft X-rays emitted by elements having a comparatively low atomic number.

**Patentansprüche**

1. Röntgenanalysegerät mit einer Röntgenquelle (1), einem Probenträger und einem Röntgendetektor (12), der längs des Strahlungsweges eines in einer Probe (4) erzeugten Rötgenstrahlenbündels (22) gesehen hinter einem laminierten Kollimierungselement (14) angeordnet ist, das das Röntgenstrahlungsbündel kollimiert, dadurch gekennzeichnet, daß jeweilige Lamellen (27) des laminierten kollimators (14) unterschiedliche Potentiale führen können und ein elektrostatisches Ablenksystem für geladene Teilchen bilden.

2. Röntgenanalysegerät mit einer Rötgenquelle (1), einem Probenträger und einem Röntgendetektor (12, 50), der längs des Strahlungsweges eines in einer Probe (4, 32) erzeugten Röntgenstrahlenbündels (22) gesehen hinter einem laminierten kollimierungselement (14, 52) angeordnet ist, das das Röntgenstrahlungsbündel kollimiert, dadurch gekennzeichnet, daß das dauermagnetische Material einen Teil der laminierten Struktur des Kollimators zur Bildung eines Ablenksystems für geladene Teilchen bildet.

3. Rötgenanalysegerät nach Anspruch 2, dadurch gekennzeichnet, daß aus dauermagnetischem Material hergestellte Distanzstücke (28) zwischen Lamellen (27) eines Kollimators Teile des magnetischen Ablenksystems bilden.

4. Rötgenanalysegerät nach Anspruch 2 oder 3, dadurch gekennzeichnet, daß das Ablenksystem derart angeordnet und abgeschirmt ist, daß die Feldstärke sowohl in der Nähe einer zu untersuchenden Probe (4, 32) als auch in der Nähe eines Röntgendetektors (12, 40, 50) oder einer Rötgenröhre (1, 30) vernachlässigbar klein ist.

5. Rötgenanalysegerät nach einem oder mehreren der vorrangehenden Ansprüche, dadurch gekennzeichnet, daß der Detektor spezifisch zum Detektieren verhältnismäßig weicher Röntgenstrahlen aus Elementen mit einer verhältnismäßig niedrigen Atomzahl ausgelegt ist.

**Revendications**

1. Appareil d'analyse par rayons X comprenant une source de rayons X (1), un porte-échantillon et un détecteur de rayons X (12), qui est disposé, vu le long de la trajectoire d'un faisceau de rayons X (22) engendré dans un échantillon (4), au-delà d'un élément collimateur lamellé (14) qui collimate le faisceau de rayons X, caractérisé en ce que des lamelles respectives (27) du collimateur lamellé (14) peuvent être maintenues à des potentiels différents et forment un système de déflexion électrostatique pour des particules chargées.

2. Appareil d'analyse par rayons X comprenant une source de rayons X (1), un porte-échantillon et un détecteur du rayons X (12, 50), qui est disposé, vu le long de la trajectoire d'un faisceau de rayons X (22) engendré dans un échantillon (4, 32), au-delà d'un élément collimateur lamellé (14, 52) qui collimate le faisceau de rayons X, caractérisé en ce qu'une matière magnétique permanente fait partie de la structure lamellée du collimateur formant un système de déflexion pour des particles chargées.

3. Appareil d'analyse par rayons X suivant la revendication 2, charactérisé en ce que des éléments d'espacement (28), qui sont faits d'une matière magnétique permanente et sont disposés entre des lamelles (27) d'un collimateur, font partie du système de déflexion magnétique.

4. Appareil d'analyse par rayons X suivant la revendications 2 ou 3, caractérisé en ce que le système de déflexion est agencé et blindé d'une manière telle que l'intensité de champ soit négligeable au voisinage d'un échantillon à examiner (4, 32) ainsi qu'au voisinage d'un détecteur de rayons X (12, 40, 50) ou d'un tube à rayons X (1, 30).

5. Appareil d'analyse par rayons X suivant l'une quelconque des revendications précédentes, caractérisé en ce que le détecteur est spécifiquement construit pour la détection de rayon X relativement mous émis par des éléments ayant un nombre atomique relativement peu élevé.

FIG.1

FIG.1a

FIG.2